(19) Europäisches Patentamt
European Patent Office
Office européen des brevets

(11) Veröffentlichungsnummer: **0 000 019**
**A1**

(12) # EUROPÄISCHE PATENTANMELDUNG

(21) Anmeldenummer: **78100031.0**

(22) Anmeldetag: **01.06.78**

(51) Int. Cl.²: **C 07 C 87/34,** C 07 C 121/78, //C 07 C 157/09, C 07 C 127/19, A 01 N 9/12, A 01 N 9/20

(30) Priorität: **03.06.77 JP 64633/77**

(43) Veröffentlichungstag der Anmeldung: **20.12.78 Patentblatt 78/1**

(84) Benannte Vertragsstaaten: **BE CH DE FR GB NL**

(71) Anmelder: **NIHON TOKUSHU NOYAKU SEIZO K.K., No.8, 2-chome, Nihonbashi Muromachi, Chuo-Ku, Tokyo (JP)**

(72) Erfinder: **Saito, Junichi, 3-7-12, Mitaka-shi, Tokyo (JP)**

(72) Erfinder: **Tamura, Tatsuo, 2800, Hane, Hamura-Cho, Nishiotama-gun, Tokyo (JP)**

(74) Vertreter: **Gremm, Joachim, Dr. et al, Bayer AG c/o Zentralbereich Patente, Marken und Lizenzen Bayerwerk, D-5090 Leverkusen (DE)**

(54) **Neue N-Benzylcycloalkylamine und Verfahren zu ihrer Herstellung.**

(57) N-Benzylcycloalkylamine und Verfahren zu ihrer Herstellung.

Die Verbindungen der allgemeinen Formel

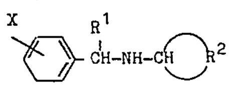

(I).

worin

$R^1$ Wasserstoff oder Alkyl mit 1 - 4 C-Atomen,

$R^2$ eine Polymethylengruppe mit 4 - 7 C-Atomen, die gegebenenfalls durch Alkyl mit 1 - 4 C-Atomen substituiert ist, und

X Halogen, Nitro, Cyan oder Alkyl mit 1 - 4 C-Atomen

bedeuten, werden erhalten, wenn man ein Benzylhalogenid mit einem Cycloalkylamin gegebenenfalls in Gegenwart eines Säurebindemittels umsetzt oder wenn man ein Benzylamin mit einem cyclischen Keton umsetzt und die erhaltene Schiff'sche Base reduziert.

Die Verbindungen der Formel (I) können als Zwischenprodukte für die Herstellung bestimmter Harnstoff- und Thioharnstoffverbindungen mit ausgezeichneten fungiziden Eigenschaften verwendet werden.

EP 0 000 019 A1

Croydon Printing Company Ltd.

Neue N-Benzylcycloalkylamine und Verfahren zu ihrer Herstellung

Die Erfindung betrifft neue N-Benzylcycloalkylamine und ein Verfahren zu ihrer Herstellung.

Die erfindungsgemäßen Verbindungen entsprechen der allgemeinen Formel

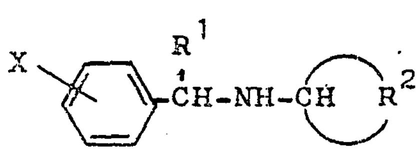 (I)

worin

$R^1$ Wasserstoff oder Alkyl mit 1 - 4 C-Atomen,

$R^2$ eine Polymethylengruppe mit 4 - 7 C-Atomen, die gegebenenfalls durch Alkyl mit 1 - 4 C-Atomen substituiert ist, und

X Halogen, Nitro, Cyan oder Alkyl mit 1 - 4 C-Atomen bedeuten.

Die Verbindungen der Formel (I) können als Zwischenprodukte für die Herstellung bestimmter Harnstoff- und Thioharnstoffverbindungen mit ausgezeichneten fungiziden Eigenschaften verwendet werden.

Vorzugsweise bedeutet $R^1$ Wasserstoff oder Methyl, $R^2$ eine gegebenenfalls durch Methyl substituierte Tetramethylen- oder Pentamethylengruppe oder eine Hexamethylengruppe und X Chlor, Brom, Nitro, Cyan oder Methyl. Bevorzugt steht der Substituent X in der 4-Position.

Die vorliegende Erfindung betrifft auch ein Verfahren zur Herstellung von Verbindungen der Formel (I), bei dem man

a) ein Benzylhalogenid der allgemeinen Formel

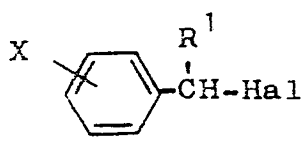

(II),

worin

$R^1$ und X die vorstehend angeführte Bedeutung besitzen und

Hal Halogen, vorzugsweise Chlor, bedeutet, mit einem Cycloalkylamin der allgemeinen Formel

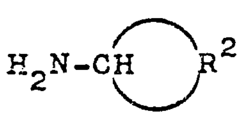

(III),

worin

$R^2$ die oben angeführte Bedeutung besitzt, gegebenenfalls in Gegenwart eines Säurebindemittels, umsetzt, oder

b) ein Benzylamin der allgemeinen Formel

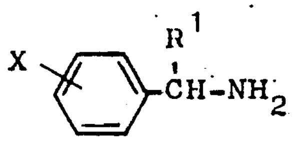

(IV),

worin

$R^1$ und X die vorstehend angeführte Bedeutung aufweisen, mit einem cyclischen Keton der allgemeinen Formel

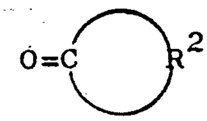

(V),

worin

$R^2$ die oben angeführte Bedeutung besitzt umsetzt, und die so erhaltene Schiff'sche Base der allgemeinen Formel

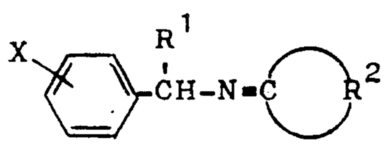

(VI),

worin

$R^1$, $R^2$ und X die oben angeführte Bedeutung besitzen, reduziert.

Beispiele für als Ausgangsstoffe in der Verfahrensvariante a) geeignete Benzylhalogenide der allgemeinen Formel (II) sind 4-Chlorbenzylchlorid, 4-Brombenzylchlorid, 4-Methylbenzylchlorid, 4-Nitrobenzylchlorid, 4-Cyanbenzylchlorid, 4-Chlor-α-methylbenzylchlorid und die entsprechenden Bromide.

Als Beispiele für Cycloalkylamine der allgemeinen Formel (III), die ebenfalls als Ausgangsstoffe in der Verfahrensvariante a) eingesetzt werden können, seien Cyclopentylamin, 3-Methylcyclopentylamin, Cyclohexylamin, 2-Methylcyclohexylamin, 3-Methylcyclohexylamin, 4-Methylcyclohexylamin und Cycloheptylamin genannt.

Werden in der Verfahrensvariante a) 4-Chlorbenzylchlorid und Cyclopentylamin als Ausgangsstoffe eingesetzt,

so kann die Umsetzung durch folgendes Schema dargestellt werden:

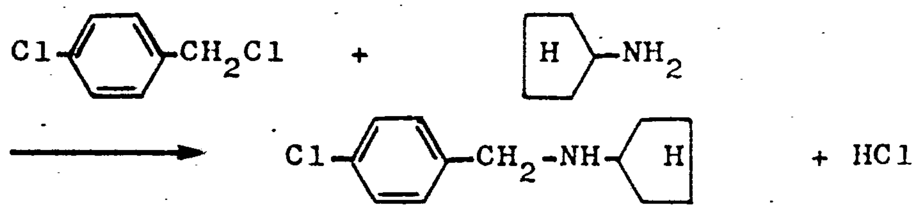

Bei Durchführung der Verfahrensvariante a) wird die Umsetzung vorzugsweise unter Verwendung der doppelten molaren Menge an Amin (bezogen auf Benzylhalogenid) durchgeführt. In diesem Fall dient der Überschuß an Amin dazu, die in der Umsetzung freigesetzte Säure zu binden. Es ist jedoch auch möglich, die molare Menge an Amin in Gegenwart einer äquimolaren Menge an Säurebindemittel einzusetzen.

Derartige Säurebindemittel sind die üblicherweise eingesetzten Säureakzeptoren, insbesondere die Hydroxide, Carbonate, Bicarbonate und Alkoholate von Alkalimetallen sowie tertiäre Amine wie z.B. Triäthylamin, Diäthylanilin und Pyridin.

Beispiele für die als Ausgangsstoffe in der Verfahrensvariante b) einzusetzenden N-Benzylamine der allgemeinen Formel (IV) sind 4-Chlorbenzylamin, 4-Brombenzylamin, 4-Methylbenzylamin, 4-Nitrobenzylamin, 4-Cyanobenzylamin und 4-Chlor-α-methylbenzylamin.

Als Beispiele für cyclische Ketone der Formel (V), welche ebenfalls als Ausgangsmaterialien in der Verfahrensvariante b) geeignet sind, seien Cyclopentanon, 3-Methylcyclopentanon, Cyclohexanon, 2-Methylcyclohexanon, 3-Methylcyclohexanon, 4-Methylcyclohexanon und Cycloheptanon genannt.

Beispiele für Reduktionsmittel für die Schiff'schen

Basen der Formel (VI) sind Natriumborhydrid, Lithiumaluminiumhydrid, metallisches Natrium (in Alkohol) und metallisches Magnesium (in Alkohol).

Bei Verwendung von 4-Chlorbenzylamin und Cyclopentanon als Ausgangsstoffe in der Verfahrensvariante b) unter Verwendung von Natriumborhydrid als Reduktionsmittel kann die Umsetzung durch folgendes Schema dargestellt werden

(i) 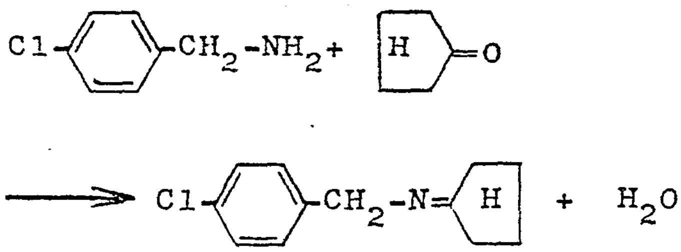

(ii) 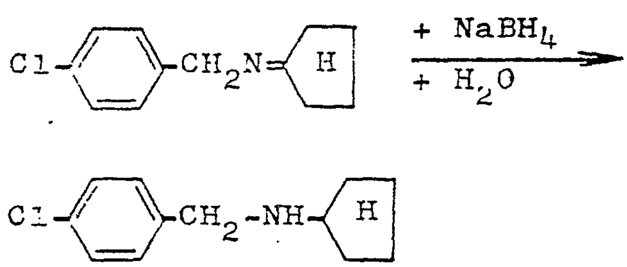


Bei Durchführung der Verfahrensvariante b) kann die als Zwischenprodukt erhaltene Schiff'sche Base isoliert oder z.B. mittels Natriumborhydrid ohne Isolierung reduziert werden, um das gewünschte N-Benzylcycloalkylamin mit hoher Reinheit in guter Ausbeute zu erhalten.

Die erfindungsgemäßen Verfahrensvarianten a) und b) werden vorzugsweise unter Verwendung eines Lösungs- oder Verdünnungsmittels durchgeführt. Beispiele für derartige Lösungs- oder Verdünnungsmittel sind Wasser und inerte organische Lösungsmittel wie aliphatische, alicyclische und aromatische Kohlenwasserstoffe, die gegebenenfalls chloriert sein können, wie z.B. Hexan, Cyclohexan, Petroläther, Ligroin, Benzol, Toluol, Xylol, Methylenchlorid, Chloroform,



BAD ORIGINAL

Tetrachlorkohlenstoff, Äthylenchlorid, Trichloräthylen und Chlorbenzol; Äther wie z.B. Diäthyläther, Methyläthyläther, Diisopropyläther, Dibutyläther, Propylenoxid, Dioxan und Tetrahydrofuran; Ketone wie z.B. Aceton, Methyläthylketon, Methylisopropylketon und Methylisobutylketon; Nitrile wie z.B. Acetonitril, Propionitril und Acrylnitril; Alkohole wie Methanol, Äthanol, Isopropanol, tert. Butanol und Äthylenglycol; Ester wie z.B. Äthylacetat und Amylacetat; Säureamide wie z.B. Dimethylformamid und Dimethylacetamid; Sulfone und Sulfoxide wie z.B. Dimethylsulfoxid und Dimethylsulfon; und Basen wie z.B. Pyridin.

Die erfindungsgemäßen Verfahrensvarianten a) und b) können innerhalb eines weiten Temperaturbereichs durchgeführt werden. Im allgemeinen wird das Verfahren innerhalb eines Temperaturbereichs von -20°C bis zum Siedepunkt des Gemisches, vorzugsweise bei Temperaturen von 0 - 100°C, vorgenommen. Die Umsetzung erfolgt vorzugsweise bei atmosphärischem Druck, sie kann jedoch auch bei erhöhtem oder vermindertem Druck durchgeführt werden.

Das erfindungsgemäße Verfahren wird anhand der nachstehenden Herstellungsbeispiele näher erläutert.

Beispiel 1

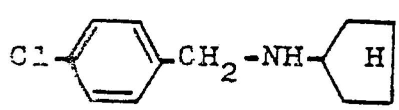

(1)

Variante a)

170 g Cyclopentylamin und 40 g Natriumhydroxid werden in 160 ml Wasser gelöst, dann werden unter Rühren und Kühlung 161 g 4-Chlorbenzylchlorid zugetropft. Nach beendeter Zugabe wird die Mischung allmählich erhitzt und bei 60 - 70°C bis zum Ende der Umsetzung 3 Stunden lang gerührt. Die Mischung wird dann bis unter Raumtemperatur



BAD ORIGINAL

gekühlt, die wässerige Phase wird abgetrennt und der Überschuß an Cyclopentylamin bei vermindertem Druck abdestilliert. Nach beendeter Destillation wird der Rückstand mit 200 ml Toluol versetzt und das Gemisch 2 mal mit jeweils 200 ml Wasser gewaschen und darauf über wasserfreiem Natriumsulfat getrocknet. Das Toluol wird unter vermindertem Druck entfernt und der Rückstand unter vermindertem Druck destilliert, wobei 195 g N-4-Chlorbenzylcyclopentylamin mit einem Siedepunkt von 109-110°C/0,2 mm Hg erhalten werden.

Variante b)

141,5 g 4-Chlorbenzylamin und 84 g Cyclopentanon werden in 400 ml Toluol gelöst. Die Temperatur des Gemisches wird allmählich erhöht, wobei sich Wasser bildet, welches dann azeotrop mittels Toluol vollständig entfernt wird, um die Umsetzung zu beenden. Das Toluol wird unter vermindertem Druck entfernt, wobei als Kondensat die Schiff'sche Base, erhalten wird.

Die Schiff'sche Base wird in 300 ml Methylalkohol gelöst und 38 g Natriumborhydrid werden unter Eiskühlung zugetropft. Nach beendeter Zugabe wird die Mischung bei 50°C 2 Stunden lang gerührt, um die Umsetzung durchzuführen. Der Methylalkohol wird aus dem Reaktionsgemisch abdestilliert, der verbleibende Rest wird mit Wasser verdünnt, um das Borhydrat zu zersetzen. Das erhaltene ölige Material wird mit Äther extrahiert. Die Ätherschicht wird über wasserfreiem Natriumsulfat getrocknet, der Äther unter vermindertem Druck abdestilliert und der Rückstand unter vermindertem Druck destilliert, wobei 150 g-N-4-Chlorbenzylcyclopentylamin mit einem Siedepunkt von 109-110°C/0,2 mm Hg erhalten werden..



BAD ORIGINAL

Beispiel 2

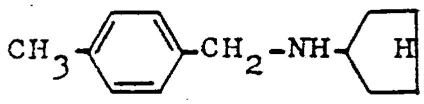 (2)

70 g 4-Methylbenzylchlorid werden unter Rühren zu 170 g Cyclopentylamin, welches eine Temperatur von 40°C aufweist, zugegeben. Nach beendeter Zugabe wird das Gemisch allmählich erhitzt und bei 60°C 2 Stunden lang gerührt, um die Umsetzung zu vollenden. Das Gemisch wird dann auf etwa 15°C gekühlt und in eine Lösung von 24 g Natriumhydroxid in 400 ml Wasser gegossen. Nach gründlichem Rühren wird das gewünschte Produkt einmal mit 300 ml Toluol und zweimal mit jeweils 100 ml Toluol extrahiert. Die organische Phase wird über wasserfreiem Natriumsulfat getrocknet und das Toluol unter vermindertem Druck abdestilliert, wobei 9' g N-4-Methylbenzylcyclopentylamin mit einem Siedepunkt von 102-103°C/0,3 mm Hg erhalten werden.

Folgende Verbindungen wurden nach den in den vorstehenden Beispielen analogen Verfahren hergestellt:

Tabelle 1

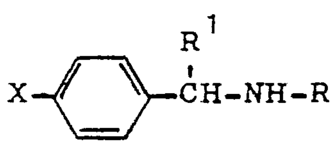 (Ia)

| Beispiel Nr. | R | $R^1$ | X | Siedepunkt |
|---|---|---|---|---|
| 3 | 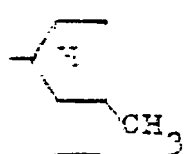 | H | Cl | 118-120°C/0,05 mm Hg |
| 4 | 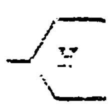 | H | Br | 117-120°C/0,4 mm Hg |
| 5 | 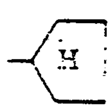 | $-CH_3$ | Cl | 124-125°C/0,7 mm Hg |



BAD ORIGINAL

Tabelle 1 (Fortsetzung)

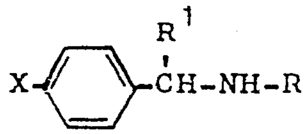

(Ia)

| Beispiel Nr. | R | $R^1$ | X | Siedepunkt |
|---|---|---|---|---|
| 6 | 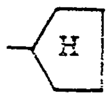 | H | $-NO_2$ | 128-131°C/0,06 mm Hg |
| 7 | 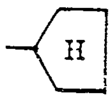 | H | -CN | 136-137°C/0,3 mm Hg |
| 8 | 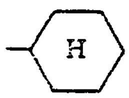 | H | Br | 129-130°C/0,01 mm Hg |
| 9 | 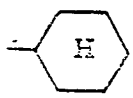 | H | $-CH_3$ | 117-119°C/0,2 mm Hg |
| 10 | 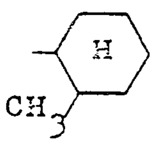 | H | Cl | 118-120°C/0,2 mm Hg |
| 11 | 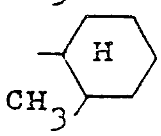 | H | Br | 118-120°C/0,01 mm Hg |
| 12 | 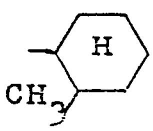 | H | $-CH_3$ | 117-120°C/0,02 mm Hg |
| 13 | 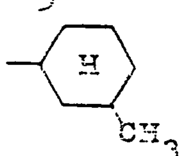 | H | Cl | 108-113°C/0,01 mm Hg |
| 14 | 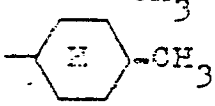 | H | Cl | 116-120°C/0,1 mm Hg |
| 15 | 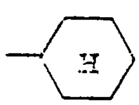 | H | Cl | 127-130°C/0,15 mm Hg |
| 16 | Cyclo-$C_7H_{13}$ | H | Cl | - |

Die durch Umsetzung der N-Benzylcycloalkylaminverbindungen der Formel (I) mit verschiedenen Isocyanaten oder Isothiocyanaten hergestellten Harnstoff- oder Thioharnstoffverbindungen besitzen ausgezeichnete fungizide Eigenschaften.

Die genannten Harnstoff- oder Thioharnstoffverbindungen können für die Kontrolle und Bekämpfung verschiedener, durch Pilze verursachter Pflanzenerkrankungen eingesetzt werden.

Die aus den erfindungsgemäßen Verbindungen hergestellten Harnstoff- oder Thioharnstoffverbindungen können gegen Pathogene, welche den über dem Erdreich gelegenen Teil der Pflanzen befallen, eingesetzt werden, ferner gegen Pathogene, welche durch Befall der unter dem Erdreich gelegenen Teile der Pflanzen der Samen oder des Erdreichs Tracheomycose verursachen. Sie sind nur geringfügig toxisch gegenüber Warmblütern und gut verträglich für höhere Pflanzen, d.h. daß sie bei normalen Anwendungskonzentrationen keine Phytotoxizität gegenüber Ackerbauprodukten aufweisen. Die erfindungsgemäßen Harnstoff- oder Thioharnstoffverbindungen können daher mit gutem Erfolg gegen die Erreger von Pilzerkrankungen an Pflanzen in der Landwirtschaft und im Gartenbau eingesetzt werden.

Derartige Harnstoffe und Thioharnstoffverbindungen können wirksam gegen Pflanzenerkrankungserreger wie Archimycetes, Phycomycetes, Ascomycetes, Basidiomycetes und Fungi Imperfecti eingesetzt werden. Insbesondere sind sie wirksam gegenüber Basidiomyceten wie z.B. Pellicularia sasakii, welche eine der wichtigsten Krankheiten bei Reispflanzen ist, und Pellicularia filamentosa, die bei verschiedenen Ackerbauprodukten auftritt. Außerdem besitzen sie ausgezeichnete Wirksamkeit gegenüber Corticium centrifugum bei verschiedenen Ackerbauprodukten, Pyricularia oryzae und Xanthomonas

oryzae, welche Reispflanzen befallen, Erwinia aroideae an Chinakohl, Xanthomonas citri an Zitrusfrüchten, Cochliobolus miyabeanus an Reispflanzen, Mycosphaerella musicola an Bananen, Botrytis cinerea an verschiedenen Ackerbauprodukten einschließlich Erdbeeren, Plasmopara viticola an Weintrauben, Glomerella cingulata an Weintrauben, Äpfeln und Birnen, Sclerotinia sclerotiorum an Gemüsen, Colletotrichum lagenarium an Gurken, Diaporthe citri an Zitrusfrüchten, Podosphaera leucotricha an Äpfeln, Sphaeroteca fuliginea an Gurken, Pilzerkrankungen, welche schwarzen Blattbrand verursachen, wie z.B. Alternaria mali an Äpfeln, Alternaria solani an Kartoffeln, Alternaria kikuchiana an Birnen und Pilzen welche Schorf verursachen, wie z.B. Venturia inaequalis an Äpfeln und Venturia pirina an Birnen.

Die fungizide Wirksamkeit der aus den erfindungsgemäßen N-Benzylcycloalkylaminverbindungen hergestellten Harnstoff- oder Thioharnstoffverbindungen geht aus den nachstehend angeführten Biotestbeispielen hervor.

Beispiel A

Bekämpfung von Blattscheidenbrand an Reispflanzen (Topftest)

Herstellung der Wirkstofformulierung

| | |
|---|---|
| Wirkstoff: | 50 Gew.-Teile |
| Trägermittel: | 45 Gew.-Teile eines 1 : 5 Gemisches aus Kieselgur und Kaolin |
| Emulgator: | 5 Gew.-Teile eines Polyoxyäthylenalkylphenyläthers |

Wirkstoff, Trägermittel und Emulgator wurden in den oben angeführten Mengen zu einem benetzbaren Pulver vermischt, welches mit Wasser auf die vorgeschriebene Konzentration verdünnt wird.

Testverfahren

Reispflanzen der Varietät Kinnampu wurden in Wag-



BAD ORIGINAL

nertöpfen mit je 0,0002 Ar unter Überschwemmungsbedingungen gezogen. Bei der Bildung junger Ähren wurde die wie vorstehend beschrieben hergestellte Formulierung der Testverbindung in Mengen von 100 ml auf jeweils 3 Töpfe aufgesprüht.

Am folgenden Tag wurden die Reispflanzen an den Wurzeln mit Pellicularia sasakii beimpft, die vorher auf einem Gerstennährboden gezogen worden war und Sklerotien gebildet hatte. Die Beimpfung der Pflanzen wurde in einer Feuchtekammer bei 28-30°C bei einer relativen Luftfeuchtigkeit von 95 % oder mehr 10 Tage lang fortgesetzt.

Nach Ablauf dieses Zeitraums wurden der Befallsgrad und das Ausmaß der Phytotoxizität bestimmt. Die Prüfung wurde durch Bemessen des Ausbreitungsgrades der Infektionsflecken von der Beimpfungsstelle von der Wurzel ausgehend vorgenommen und der Befallsgrad wurde wie folgt bewertet.

$$\text{Befallsgrad:} \quad \frac{3n_3 + 2n_2 + n_1 + n_o}{3N} \times 100$$

worin

N = Gesamtzahl der geprüften Reisstengel

$n_o$ = Anzahl der Stengel ohne Anzeichen von Befall

$n_1$ = Anzahl der Stengel, die von unten an bis zur ersten Blattscheide befallen waren

$n_2$ = Anzahl der Stengel, die von unten an bis zur zweiten Blattscheide befallen waren

$n_3$ = Anzahl der Stengel, die von unten an bis zur dritten Blattscheide befallen waren

Die Ergebnisse der Tests sind aus Tabelle A ersichtlich:

**Tabelle A**

Bekämpfung von Blattscheidenbrand an Reispflanzen

Verbindung 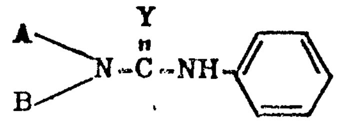

| A | B | Y | Wirkstoff-konzentration in % | Befallsgrad in % | Phytotoxizität |
|---|---|---|---|---|---|
| 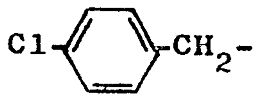 | 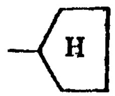 | O | 0,0125 | 0 | - |
| | | | 0,025 | 0 | - |
| | | | 0,05 | 0 | - |
| 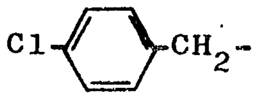 | 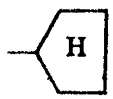 | S | 0,0125 | 0 | - |
| | | | 0,025 | 0 | - |
| | | | 0,05 | 0 | - |
| 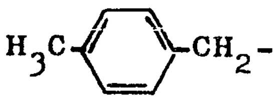 | 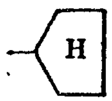 | O | 0,0125 | 11,7 | - |
| | | | 0,025 | 0 | - |
| | | | 0,05 | 0 | - |
| 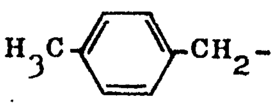 | 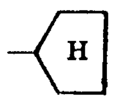 | S | 0,0125 | 7,3 | - |
| | | | 0,025 | 0 | - |
| | | | 0,05 | 0 | - |
| 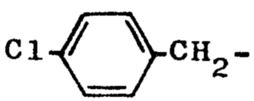 | 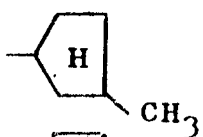 | O | 0,05 | 3,0 | - |
| 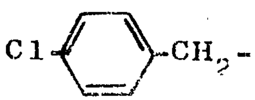 | 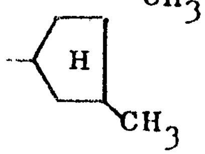 | S | 0,05 | 0 | - |

Verbindung 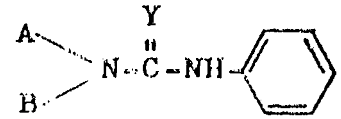

| A | B | Y | Wirkstoffkonzentration in % | Befallsgrad in % | Phytotoxizität |
|---|---|---|---|---|---|
| 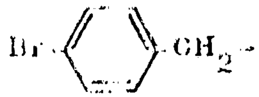 | 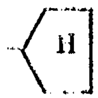 | O | 0,025 | 3,5 | - |
| | | | 0,05 | 0 | - |
| 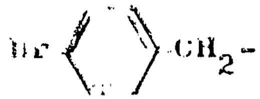 | 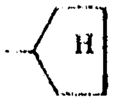 | S | 0,025 | 1,0 | - |
| | | | 0,05 | 0 | - |
| 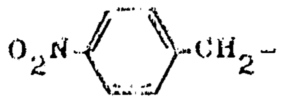 | 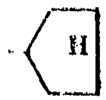 | O | 0,05 | 3,0 | - |
| 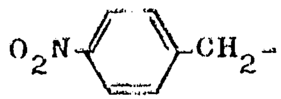 | 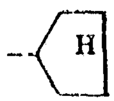 | S | 0,05 | 3,0 | - |
| 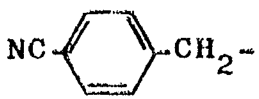 | 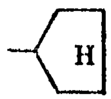 | O | 0,05 | 10,3 | - |
| 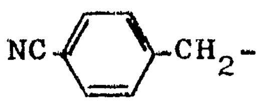 | 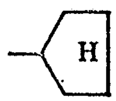 | S | 0,05 | 5,7 | - |
| 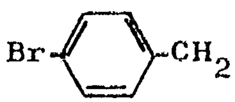 | 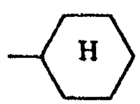 | O | 0,05 | 3,7 | - |
| 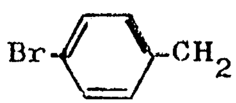 | 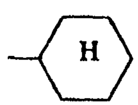 | S | 0,05 | 1,3 | - |

BAD ORIGINAL

Nit 125





Verbindung 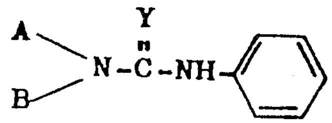

| A | B | Y | Wirkstoffkonzentration in % | Befallsgrad in % | Phytotoxizität |
|---|---|---|---|---|---|
| 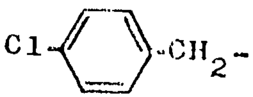 | 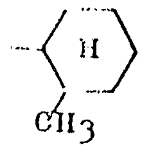 | S | 0,1 | 8,5 | - |
| 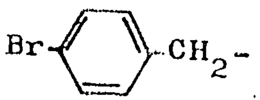 | 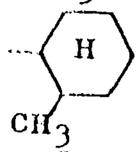 | O | 0,05 | 2,7 | - |
| 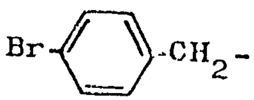 | 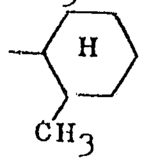 | S | 0,025<br>0,05 | 4,3<br>0 | -<br>- |
| 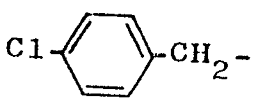 | $-C_7H_{13}$-cyclo | S | 0,1 | 12,7 | - |
| Polyoxinkomplex | | | 0,0045 | 21,5 | - |
| keine Behandlung | | | - | 78,3 | - |

Anmerkungen: 1) Der Polyoxinkomplex wurde als handelsübliche Vergleichsverbindung verwendet
2) "-" in der Phytotoxizitätsspalte bedeutet das vollständige Fehlen von Phytotoxizität

Beispiel B

Bekämpfung von Rhizopus oryzae (Umfallkrankheit der Keimlinge)

Wirkstofformulierung:

| | |
|---|---|
| Wirkstoff: | 10 Gew.-Teile |
| Lösungsmittel: | 80 Gew.-Teile Dimethylformamid |
| Emulgator: | 10 Gew.-Teile Polyoxyäthylenalkylphenyläther |

Testverfahren:

In einem Autoklaven sterilisiertes Hochlanderdreich (organisches Erdreich) wurde mit Rhizopus oryzae beimpft, der auf Weizenkleienährboden 5 Tage lang gezogen worden war, der Mikroorganismus wurde durch Halten des Erdreichs in einer Feuchtkammer während 48 Stunden zum Vermehren gebracht, um das Erdreich zu infizieren. Das wie vorstehend beschrieben infizierte Erdreich wurde in einen Setzkasten mit den Abmessungen 58 cm x 28 cm eingebracht und 2 cm tief verteilt, dann wurden etwa 350 ml ungeschälter Reis der Varietät Asahi, der 48 Stunden in Wasser angequollen und damit zur beginnenden Keimung gebracht worden war, in den Kasten gesät und mit Erdreich bedeckt..

Das Erdreich wurde darauf mit einer verdünnten, wässerigen Lösung der Wirkstofformulierung in der vorgeschriebenen Konzentration in Mengen von 500 ml pro Kasten berieselt. Die Setzkästen wurden in einer Feuchtkammer 4 Tage lang bei Temperaturen von 33-35°C gehalten, um die Keimung einzuleiten. Nach Entnahme aus der Feuchtkammer wurden die Setzlinge auf herkömmliche Weise zum Ergrünen und Erhärten gebracht und in einem Treibhaus mit der üblichen Sorgfalt gezogen. 15 Tage nach Beginn der Keimung wurden insgesamt 100 Setzlinge von zwei Stellen in der Mitte jedes Setzkastens entnommen und der Wurzelbefall und der



BAD ORIGINAL

Befallsgrad mit Umfallkrankheit der Keimlinge wurde nach der nachstehenden Norm bewertet:

(A) schwerer Befall: alle Wurzeln abgestorben oder verkümmertes Wurzelwachstum, oder alle Wurzelhauben gehemmt.

(B) leichter Befall: normales Wachstum 1-2 Wurzelhauben und Hauptwurzeln.

(C) gesund: normales Wachstum von 3 oder mehr Wurzelhauben und Hauptwurzeln.

Der Befallsgrad wurde gemäß nachstehender Gleichung berechnet:

$$\text{Befallsgrad} = \frac{3\ An + Bn}{3N} \times 100$$

worin

An die Zahl der schwer befallenen Stengel

Bn die Zahl der leicht befallenen Stengel

Cn die Zahl der gesunden Stengel

bedeutet und

N : An x Bn + Cn = 100 ist.

Die Testergebnisse sind aus der nachstehenden Tabelle B ersichtlich.

<u>Tabelle B</u>

Bekämpfung von Rhizopus oryzae

Verbindung 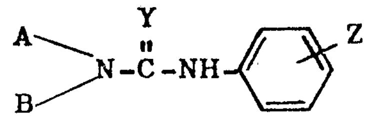

| A | B | Y | Z | Wirkstoffkonzentration in % | Befallsgrad in % | Phytotoxizität |
|---|---|---|---|---|---|---|
| 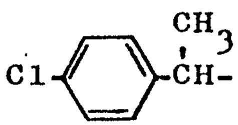 | 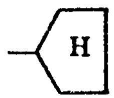 | S | H | 0,1 | 3,5 | - |
| 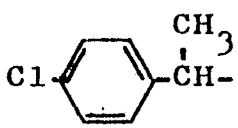 | 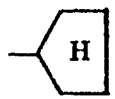 | S | 4-Cl | 0,1 | 0,5 | - |
| 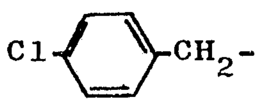 | 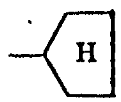 | S | 4-Cl | 0,1 | 4,5 | - |
| Daconil | | | | 0,1 | 5,5 | - |
| Keine Behandlung (mit Beimpfung) | | | | - | 85,4 | - |
| Keine Behandlung (ohne Beimpfung) | | | | - | 0 | - |

Anmerkungen: 1) Daconil wird als handelsübliche Vergleichsverbindung eingesetzt (Tetrachlorisophthalonitril 75 % benetzbares Pulver)
2) "-" in der Phytotoxizitätsspalte bedeutet vollständiges Fehlen der Phytotoxizität

Patentansprüche:

1. N-Benzylcycloalkylamine der allgemeinen Formel

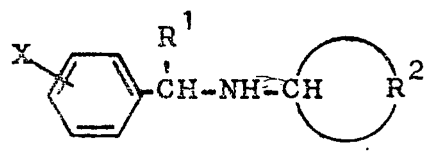 (I)

worin

| | |
|---|---|
| $R^1$ | Wasserstoff oder Alkyl mit 1 - 4 C-Atomen, |
| $R^2$ | eine Polymethylengruppe mit 4 - 7 C-Atomen, die gegebenenfalls durch Alkyl mit 1 - 4 C-Atomen substituiert ist, und |
| X | Halogen, Nitro, Cyan oder Alkyl mit 1 - 4 C-Atomen bedeuten. |

2. Verfahren zur Herstellung von N-Benzylcycloalkylaminen, dadurch gekennzeichnet, daß man

a) ein Benzylhalogenid der allgemeinen Formel

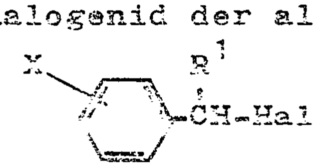 (II),

worin

| | |
|---|---|
| $R^1$ und X | die vorstehend angeführte Bedeutung besitzen und |
| Hal | Halogen, vorzugsweise Chlor, bedeutet, mit einem Cycloalkylamin der allgemeinen Formel |

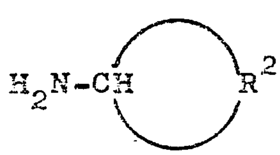 (III),

worin

| | |
|---|---|
| $R^2$ | die oben angeführte Bedeutung besitzt, gegebenenfalls in Gegenwart eines Säurebindemittels, umsetzt oder |



BAD ORIGINAL

b) ein Benzylamin der allgemeinen Formel

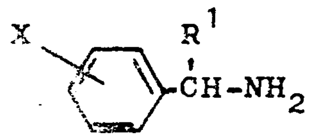

(IV)

worin

$R^1$ und X die vorstehend angeführte Bedeutung aufweisen, mit einem cyclischen Keton der allgemeinen Formel

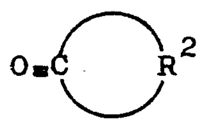

(V)

worin

$R^2$ die oben angeführte Bedeutung besitzt umsetzt und die so erhaltene Schiff'sche Base der allgemeinen Formel

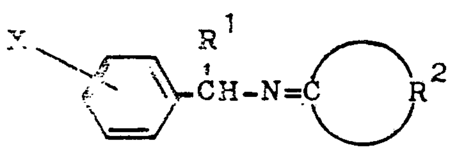

(VI)

worin

$R^1$, $R^2$ und X die oben angeführte Bedeutung besitzen, reduziert.



BAD ORIGINAL

Europäisches Patentamt

# EUROPÄISCHER RECHERCHENBERICHT

C000019

Nummer der Anmeldung

EP 78 10 0031

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | TETRAHEDRON LETTERS, Januar 1976, Oxford, ATTA-ur-RAHMAN, A.BASHA und N.WAHEED, "A new method for the reduction of amides to amines with sodium borohydride", Seiten 219-222<br>* Seite 221 *<br>-- | 1 |
| X | EXPERIENTIA, vol. 33, Januar 1977, Basel, A.BASHA und A.RAHMAN "A new method for the reduction of amides with zinc ethanol", Seiten 101-102<br>* Seite 101 *<br>-- | 1 |
| P | FR - A - 2 359 123 (NIHON TOKUSHU NOYAKU SEIZO)<br>* Seite 2, Zeilen 8-11; Seite 5, Zeilen 1-8; Seiten 17-18 *<br>-- | 1 |
| | DE - A - 2 403 138 (HOECHST)<br>* Patentansprüche 1,24,25 *<br>---- | 1-2 |

KLASSIFIKATION DER ANMELDUNG (Int.Cl.²)

C 07 C 87/34
C 07 C 121/78
//C 07 C 127/19
C 07 C 157/09
A 01 N 9/12
A 01 N 9/20

RECHERCHIERTE SACHGEBIETE (Int. Cl.²)

C 07 C 87/34
C 07 C 121/78

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

N

Der vorliegende Recherchenbericht wurde für alle Patentansprüche erstellt.